# EUROPEAN PATENT APPLICATION

(11) **EP 4 660 046 A1**
(43) Date of publication of application: **10.12.2025**
(21) Application number: 25180121.3
(22) Date of filing: 02.06.2025
(51) Int. Cl.: B62B 7/06, B62B 7/08

(54) **STROLLER**

(30) Priority: 03.06.2024 CN 202410711769
(71) Applicant: Wonderland Switzerland AG, 6312 Steinhausen (CH)
(72) Inventor: Guo, Quanguang, Guangdong, 523648 (CN)
(74) Representative: ERNICKE Patent- und Rechtsanwälte PartmbB

(57) **Abstract**

The present disclosure relates to a stroller (1000) including a frame body (100) and a folding mechanism (300). The frame body (100) includes a handlebar frame (130), a rear leg frame (110) pivotally connected to the handlebar frame (130) to form a first pivot point (X1), and a front leg frame (120) pivotally connected to the handlebar frame (130) to form a second pivot point (X2). The folding mechanism (300) includes: a first connecting rod (310) pivotally connected to the rear leg frame (110); a second connecting rod (320) pivotally connected to the first connecting rod (310) and the front leg frame (120) respectively at second and third pivotable connection points (S2, S3); and a linkage rod (330) pivotally connected to the first connecting rod (310) and the front leg frame (120) respectively at first and second rotation points (R1, R2). The second rotation point (R2) is located between the second pivot point (X2) and the third pivotable connection point (S3). The linkage rod (330) is adapted to drive the first connecting rod (310) to rotate.

## Description

### TECHNICAL FIELD

The present disclosure relates to the technical field of wheeled moving devices, and in particular, to a stroller.

### BACKGROUND

For families with infants and young children, using a stroller as a tool to assist with caregiving while taking infants and young children out has become a common and convenient practice.

To enhance the practicality and convenience of using the stroller, the stroller is typically provided with a folding mechanism that allows the stroller frame to be folded and unfolded. Additionally, to help users place their belongings and reduce their burden, a storage basket with an accommodation space is usually positioned beneath the stroller seat. However, the folding of the stroller frame and the folding of the storage basket often interfere with each other, leading to issues such as complicated operation, difficulty in folding, and a lack of smoothness during the folding of the stroller or frame, and a large volume of the frame after folding.

### SUMMARY

In view of this, to solve the above problems, there is a need to provide a stroller that has enhanced smoothness and convenience in folding, reduced difficulty associated with folding, and reduced volume of the folded frame.

A stroller includes a frame body and a folding mechanism. The frame body includes a front leg frame, a rear leg frame, and a handlebar frame. The rear leg frame is pivotally connected to the handlebar frame to form a first pivot point, and the front leg frame is pivotally connected to the handlebar frame to form a second pivot point.

The folding mechanism includes a first connecting rod, a second connecting rod, and a linkage rod. The first connecting rod and the rear leg frame are pivotally connected to each other at a first pivotable connection point. The second connecting rod and the first connecting rod are pivotally connected to each other at a second pivotable connection point, and the second connecting rod and the front leg frame are pivotally connected to each other at a third pivotable connection point. The linkage rod and the first connecting rod are pivotally connected to each other at a first rotation point, and the linkage rod and the front leg frame are pivotally connected to each other at a second rotation point.

The second rotation point is located between the second pivot point and the third pivotable connection point. The linkage rod is adapted to drive the first connecting rod to rotate to cause the frame body to switch between a folded state and an unfolded state.

In an embodiment, a first end of the linkage rod is pivotally connected to the first connecting rod to form the first rotation point. The first rotation point is located between the first pivotable connection point and the second pivotable connection point.

In an embodiment, the first connecting rod is provided with a first limiting portion. The first limiting portion is adapted to abut against a side edge of the second connecting rod to limit a pivot angle between the first connecting rod and the second connecting rod when the frame body is folded.

Additionally or alternatively, the second connecting rod is provided with a second limiting portion. The second limiting portion is adapted to abut against a side edge of the first connecting rod to limit the pivot angle between the first connecting rod and the second connecting rod when the frame body is folded.

In an embodiment, an end portion of the first connecting rod pivotally connected to the second connecting rod is provided with a first recessed portion. The first recessed portion is adapted to at least partially receive the second connecting rod. A side wall of the first recessed portion forms the first limiting portion adapted to abut against the side edge of the second connecting rod.

Additionally or alternatively, an end portion of the second connecting rod pivotally connected to the first connecting rod is provided with a second recessed portion. The second recessed portion is adapted to at least partially receive the first connecting rod. Preferentially, a side wall of the second recessed portion forms the second limiting portion adapted to abut against the side edge of the first connecting rod.

In an embodiment, the rear leg frame includes a rear cross rod and rear vertical rods respectively connected to two ends of the rear cross rod, and / or the front leg frame includes a front cross rod and front vertical rods respectively connected to two ends of the front cross rod.

Preferentially, when the frame body is in the folded state, the first connecting rod is parallel to the rear vertical rod, or the second connecting rod is parallel to the front vertical rod. Additionally or alternatively, when the frame body is in the unfolded state, the first connecting rod and the second connecting rod are collinear.

In an embodiment, the first rotation point is located between the first pivotable connection point and the second pivotable connection point. Preferentially, the linkage rod is recessed towards a side away from the second pivotable connection point to form a clearance recess.

When the frame body is in the folded state, the linkage rod is spaced apart from the second pivotable connection point through the clearance recess.

In an embodiment, the first connecting rod is provided with a first fixing portion, the second connecting rod is provided with a second fixing portion. Preferentially, at least one of the first fixing portion and the second fixing portion is, or the both fixing portions are each adapted to connect to a storage basket fabric.

In an embodiment, the stroller further includes a locking joint. Preferentially, the locking joint includes a first connecting base and a second connecting base. The first connecting base may be connected to one of the handlebar frame and the front leg frame. The second connecting base may be connected to the other of the handlebar frame and the front leg frame. The first connecting base may be pivotally connected to the second connecting base to define the second pivot point.

The stroller may further include a seat assembly. The seat assembly may be provided with a mounting base. Preferentially, the second connecting base is provided with an engaging portion protruded away from the first connecting base. The engaging portion is adapted to engage with the mounting base.

In an embodiment, the locking joint is provided with a locking mechanism. The locking mechanism includes at least one of a locking member, a pushing member, and an unlocking member.

The locking member may be movably provided in the first connecting base or the second connecting base to allow the locking member to switch between a locked position and an unlocked position. When the locking member is in the locked position, the locking member may be fitted with each of the first connecting base and the second connecting base to restrict the relative pivoting of the first connecting base and the second connecting base. Alternatively or additionally, when the locking member is in the unlocked position, the locking member may be removed from one of the first connecting base and the second connecting base to allow the relative pivoting between the first connecting base and the second connecting base.

The pushing member may be movably provided in the second connecting base. The pushing member may be adapted to push the locking member to drive the locking member to move to the unlocked position.

The unlocking member may be pivotably provided in the second connecting base to push the pushing member to move.

In an embodiment, after the engaging portion is engaged with the mounting base, the unlocking member may be shielded by the mounting base.

In the stroller according to an embodiment of the present disclosure, the linkage rod drives the first connecting rod to rotate and drives the second connecting rod pivotally connected to the first connecting rod to rotate, thereby preferentially driving the front leg frame to pivot towards or away from the rear leg frame, and thus further preferentially enabling the frame body to switch between the folded state and the unfolded state. This may enable the stroller to be folded quickly and smoothly, which not only decreases the difficulty of folding of the stroller, but also results in a smaller volume of the stroller after folding, facilitating storage and transportation.

### BRIEF DESCRIPTION OF THE DRAWINGS

FIG. 1 illustrates a side view of a stroller according to an embodiment of the present disclosure;
FIG. 2 illustrates an exploded view of the stroller in FIG. 1;
FIG. 3 illustrates a side view of a frame body of the stroller according to an embodiment of the present disclosure, with the frame body in an unfolded state;
FIG. 4 illustrates a side view of the frame body of the stroller according to an embodiment of the present disclosure, with the frame body in a semi-folded state between the unfolded state and a folded state;
FIG. 5 illustrates a sectional view of the frame body of the stroller according to an embodiment of the present disclosure, with the frame body in the folded state;
FIG. 6 illustrates a schematic exploded view of a folding mechanism of the stroller according to an embodiment of the present disclosure;
FIG. 7 illustrates a schematic exploded view of the folding mechanism of the stroller according to an embodiment of the present disclosure from another perspective;
FIG. 8 illustrates a partial sectional view taken along line U-U in FIG. 2; and
FIG. 9 illustrates a schematic exploded view of a locking joint of the stroller according to an embodiment of the present disclosure.

### DETAILED DESCRIPTION

It should be noted that when an element is referred to as being "fixed to" another element, the element may be directly located on the other element or an intermediate element may exist. When an element is referred to as being "connected to" another element, the element may be directly connected to the another element or an intermediate element may co-exist. The terms "vertical", "horizontal", "left", "right", and similar expressions used herein are for illustrative purposes only, and do not indicate unique implementations.

Unless defined otherwise, all technical and scientific terms used herein have the same meanings as would generally understood by those skilled in the technical field of the present disclosure. The terms used herein in the specification of the present disclosure are for the purpose of describing specific embodiments only, and are not intended to limit the present disclosure. The term "and/or" used herein includes any and all combinations of one or more related listed items.

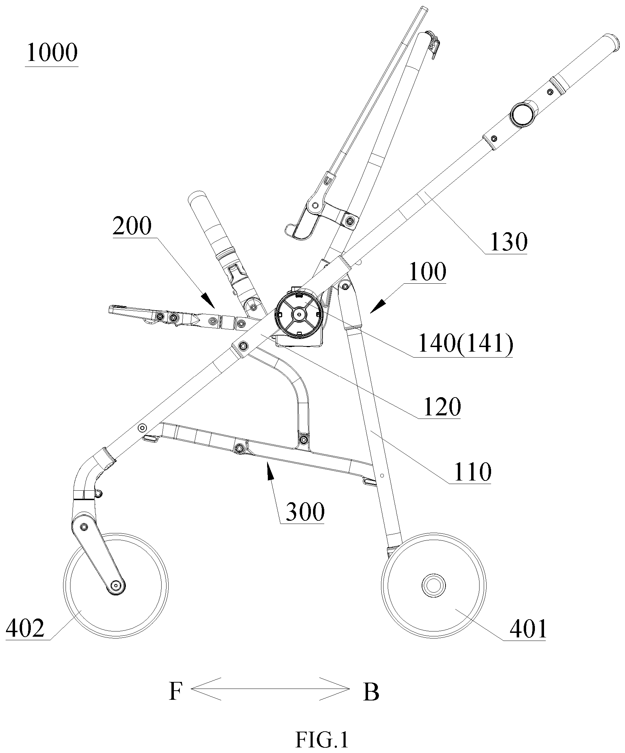

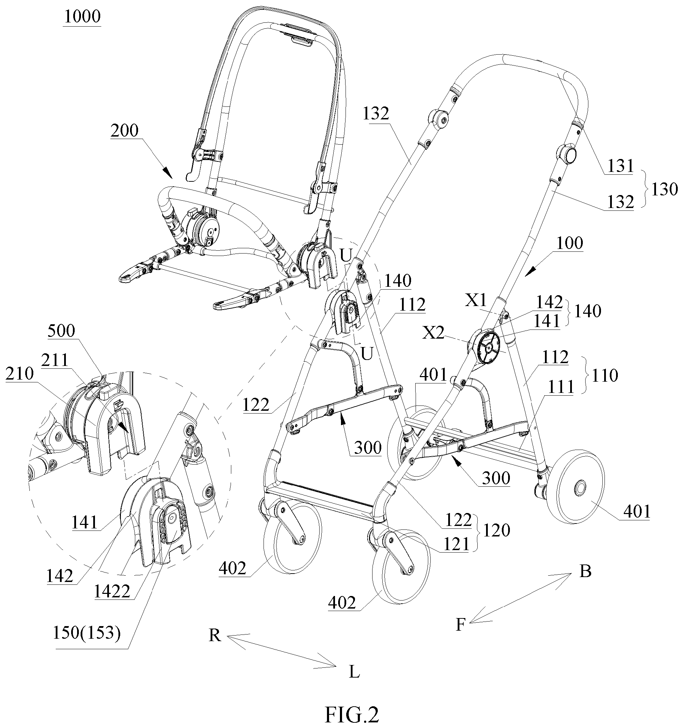

FIG. 1 and FIG. 2 illustrate a stroller 1000 according to an embodiment of the present disclosure. The stroller 1000 has a substantially bilaterally symmetric overall structure and may include a frame body 100, a seat assembly 200, and a folding mechanism 300. The frame body 100, the seat assembly 200, and the folding mechanism 300 will be described below along with the description of the stroller 1000.

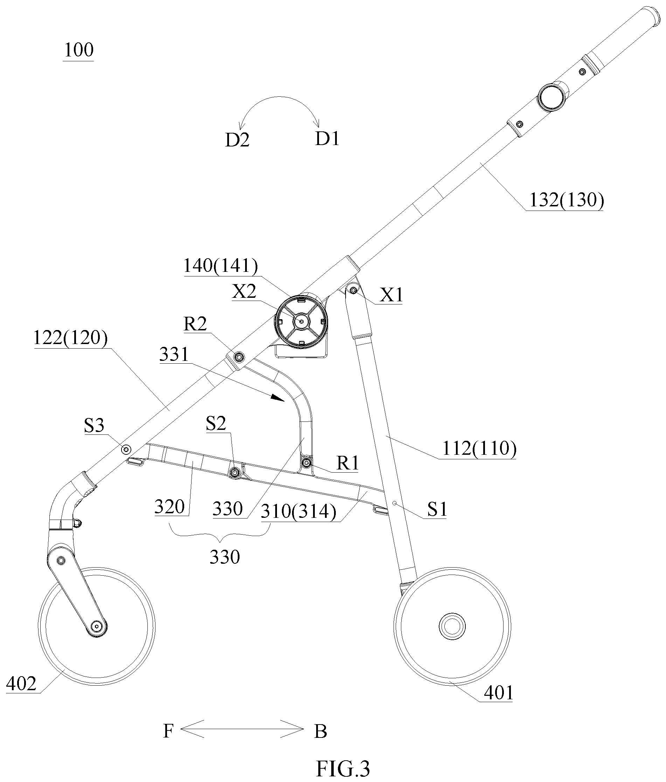

Referring to FIG. 3 to FIG. 5, the frame body 100 of the stroller 1000 may include a front leg frame 120, a rear leg frame 110, and a handlebar frame 130. The rear leg frame 110 and the handlebar frame 130 are pivotally connected to each other to form a first pivot point X1 (also referred to as a first pivot axis X1), and the front leg frame 120 and the handlebar frame 130 are pivotally connected to each other to form a second pivot point X2 (also referred to as a second pivot axis X2), so that the frame body 100 is switchable between an unfolded state and a folded state. This enables the stroller 1000 to be folded quickly and smoothly, which not only decreases the difficulty of folding of the stroller 1000, but also results in a smaller volume of the stroller 1000 after folding, facilitating storage and transportation.

Returning to FIG. 2, the handlebar frame 130 is substantially U-shaped, but the present disclosure is not limited thereto. The handlebar frame 130 includes a handlebar cross rod 131 and handlebar vertical rods 132 respectively connected to left and right ends of the handlebar cross rod 131. An end of each of the handlebar vertical rods 132 away from the handlebar cross rod 131 (i.e., a tail end of the handlebar frame 130) is pivotally connected to the front leg frame 120 via a locking joint 140, with the second pivot point X2 defined by the locking joint 140. In an extension direction of the handlebar vertical rod 132, the second pivot point X2 is farther from the handlebar cross rod 131 than the first pivot point X1. The specific structure of the locking joint 140 will be described below.

The front leg frame 120 is substantially U-shaped, but the present disclosure is not limited thereto. The front leg frame 120 includes a front cross rod 121 and front vertical rods 122 respectively connected to left and right ends of the front cross rod 121. The front cross rod 121 extends substantially in a left-right direction, and is connected to an end of each of the front vertical rods 122. An end of each of the front vertical rods 122 away from the front cross rod 121 (i.e., a tail end of the front leg frame 120) is connected to the locking joint 140. The front cross rod 121 may also function as a foot pedal when a child sits on the seat assembly 200 of the stroller 1000. The front leg frame 120 is provided with at least one front wheel 402 at a bottom thereof, and the front wheel 402 may be a universal wheel or a non-universal wheel. In this embodiment, two front wheels 402 are provided at the bottom of the front leg frame 120, and the two front wheels 402 are spaced apart from each other in the left-right direction.

The rear leg frame 110 includes a rear cross rod 111 and rear vertical rods 112 respectively connected to left and right ends of the rear cross rod 111. The rear cross rod 111 extends substantially in the left-right direction. The rear leg frame 110 is provided with at least one rear wheel 401 at a bottom thereof, and a total number of the rear wheel 401 and the front wheel 402 is not less than three. The rear wheel 401 may be a universal wheel or a non-universal wheel. In this embodiment, two rear wheels 401 are provided at the bottom of the rear leg frame 110, and the two rear wheels 401 are spaced apart from each other in the left-right direction. In this embodiment, the rear wheel 401 has a size larger than that of the front wheel 402, so that the overall structure of the stroller 1000 is more stable. Certainly, in another alternative embodiment, the size of the rear wheel 401 may be the same as or smaller than that of the front wheel 402.

It should be noted that, unless otherwise explicitly stated and defined, the orientation terms such as "left" and "right" in relation to the stroller 1000 in the embodiments of the present disclosure are based on the "left" and "right" orientations of the stroller 1000 when it is in normal traveling, and the "left" and "right" directions are schematically shown by arrows L and R in the drawings. These orientation terms are used only to make the description of the embodiments of the present disclosure clearer, and are not used to unduly define the protection scope of the present disclosure.

As shown in FIG. 2, two folding mechanisms 300 are symmetrically provided at the left and right sides of the frame body 100, and the folding mechanisms 300 are configured to fold various parts of the frame body 100 synchronously. The two folding mechanisms 300 are each located at an inner side of the frame body 100. For ease of description, the following is described with the folding mechanism 300 at one side of the frame body 100 as an example.

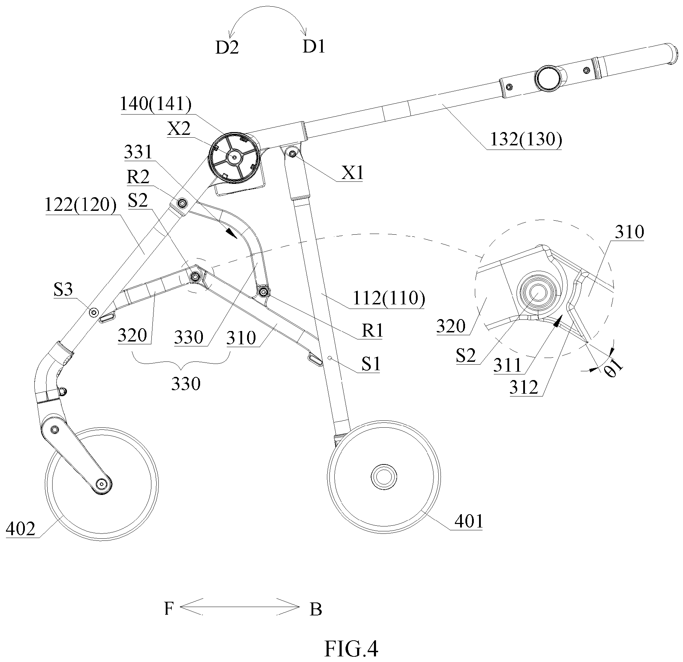

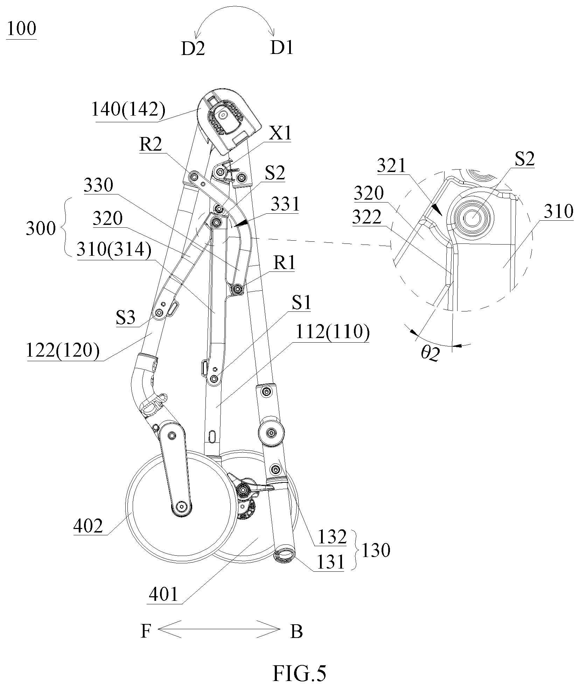

Referring to FIG. 3 to FIG. 5, the folding mechanism 300 includes a first connecting rod 310, a second connecting rod 320, and a linkage rod 330. The first connecting rod 310 and the rear leg frame 110 are pivotally connected to each other at a first pivotable connection point S1 (also referred to as a first pivotable connection axis S1). The first connecting rod 310 and the second connecting rod 320 are pivotally connected to each other at a second pivotable connection point S2 (also referred to as a second pivotable connection axis S2). The second connecting rod 320 and the front leg frame 120 are pivotally connected to each other at a third pivotable connection point S3 (also referred to as a third pivotable connection axis S3). Optionally, an end portion of the first connecting rod 310 (i.e., a first end portion of the first connecting rod 310) is pivotally connected to the rear vertical rod 112 to form the first pivotable connection point S1, and an end portion of the first connecting rod 310 away from the first pivotable connection point S1 (i.e., a second end portion of the first connecting rod 310) is pivotally connected to an end portion of the second connecting rod 320 (i.e., a first end portion of the second connecting rod 320) to form the second pivotable connection point S2. Optionally, an end portion of the second connecting rod 320 away from the second pivotable connection point S2 (i.e., a second end portion of the second connecting rod 320) is pivotally connected to the front vertical rod 122 of the front leg frame 120 to form the third pivotable connection point S3. The linkage rod 330 is pivotally connected to each of the front leg frame 120 and the first connecting rod 310. Optionally, the linkage rod 330 has a first end and a second end, the first end is pivotally connected to the first connecting rod 310 to form a first rotation point R1, and the second end is pivotally connected to the front vertical rod 122 of the front leg frame 120 to form a second rotation point R2. In this way, the linkage rod 330 can drive the first connecting rod 310 to rotate and drive the second connecting rod 320 pivotally connected to the first connecting rod 310 to rotate, thereby driving the front leg frame 120 to pivot towards or away from the rear leg frame 110, and thus enabling the frame body 100 to switch between the folded state (see FIG. 5) and the unfolded state (see FIG.4). Optionally, a length of the first connecting rod 310 is greater than a length of the second connecting rod 320.

Referring to FIG. 3 to FIG. 5, in this embodiment, the first rotation point R1 is located between the first pivotable connection point S1 and the second pivotable connection point S2. That is, the first rotation point R1 does not coincide with the first pivotable connection point S1, nor with the second pivotable connection point S2. The second rotation point R2 is located between the second pivot point X2 and the third pivotable connection point S3. That is, the second rotation point R2 does not coincide with the second pivot point X2, nor with the third pivotable connection point S3. Optionally, a distance between the first rotation point R1 and the first pivotable connection point S1 is substantially equal to a distance between the first rotation point R1 and the second pivotable connection point S2. That is, the linkage rod 330 is connected to substantially the middle of the first connecting rod 310. Optionally, the second rotation point R2 is located closer to the second pivot point X2. That is, a distance between the second rotation point R2 and the second pivot point X2 is smaller than a distance between the second rotation point R2 and the third pivotable connection point S3. In this way, the interference of the folding mechanism 300 with the frame body 100 is minimized, allowing the frame body 100 to be folded more smoothly and resulting in a smaller volume of the folded frame body 100.

It should be noted that the sentence "the first rotation point R1 is located between the first pivotable connection point S1 and the second pivotable connection point S2" means that the first rotation point R1 is located between the first pivotable connection point S1 and the second pivotable connection point S2 in an extension direction of the first connecting rod 310. Similarly, the sentence "the second rotation point R2 is located between the second pivot point X2 and the third pivotable connection point S3" means that the second rotation point R2 is located between the second pivot point X2 and the third pivotable connection point S3 in an extension direction of the front vertical rod 122 of the front leg frame 120.

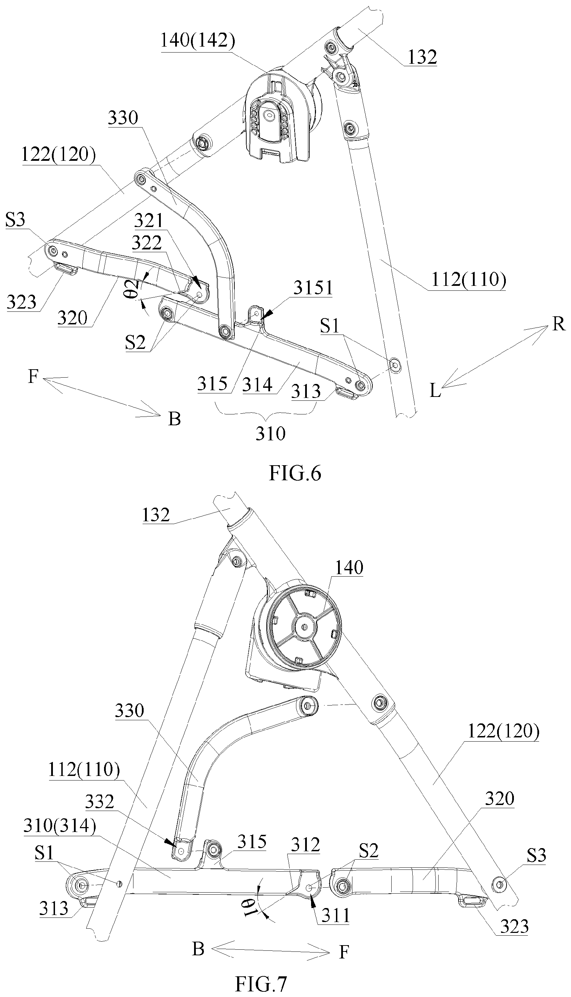

Referring to FIG. 6 and FIG. 7, the first connecting rod 310 includes a main body portion 314 and a pivoting portion 315. The main body portion 314 has a substantially linearly extending rod structure, and the extension direction of the first connecting rod 310 may be understood as an extension direction of the main body portion 314. The pivoting portion 315 is provided at a side of the main body portion 314, and optionally, the pivoting portion 315 is located substantially at the middle of the main body portion 314. Optionally, two ends of the main body portion 314 are respectively pivotally connected to the rear leg frame 110 and the second connecting rod 320, and the pivoting portion 315 is pivotally connected to the first end of the linkage rod 330. Optionally, the first end of the linkage rod 330 is provided with a first avoidance recess 332, the pivoting portion 315 is provided with a second avoidance recess 3151, a part of the pivoting portion 315 is received in the first avoidance recess 332, and the first end of the linkage rod 330 is received in the second avoidance recess 3151, such that a surface of the linkage rod 330 can be substantially flush with a surface of the pivoting portion 315 near the first rotation point R1. In this way, the linkage rod 330 can pivot relative to the first connecting rod 310 substantially in the same plane, which reduces a space occupied by the folding mechanism 300 in the left-right direction, and prevents the folding mechanism 300 from interfering with the folding or unfolding of the frame body 100.

The first connecting rod 310 is provided with a first fixing portion 313. Optionally, the first fixing portion 313 is located close to the first pivotable connection point S1. The second connecting rod 320 is provided with a second fixing portion 323. Optionally, the second fixing portion 323 is located close to the third pivotable connection point S3. The first fixing portion 313 and the second fixing portion 323 are each adapted to be connected to a storage basket fabric (not shown).

In some embodiments, the stroller 1000 is provided with a storage basket assembly including the storage basket fabric (not shown) and a storage basket rod. The storage basket fabric is made of a flexible material that is foldable, such as a woven fabric, a woven mesh, and a plastic cloth. The storage basket fabric is fixed to the storage basket rod. Referring to FIG. 3, in this embodiment, the first connecting rod 310 and the second connecting rod 320 are each formed as a storage basket rod. As such, when the first connecting rod 310 and the second connecting rod 320 pivot relative to each other, the storage basket fabric can be driven to be folded, thereby achieving the folding of the storage basket assembly.

In an embodiment not shown, the storage basket fabric may be fixed to the first connecting rod 310 and the second connecting rod 320 via a storage basket rod. A structure of the storage basket rod corresponds to that of the first connecting rod 310 and the second connecting rod 320, such that when the first connecting rod 310 and the second connecting rod 320 pivot relative to each other, the storage basket rod can be driven to fold, thereby causing the storage basket fabric to fold and thus enabling the folding of the storage basket assembly.

Referring to FIG. 5, when the frame body 100 is in the folded state, in a front-rear direction, the rear leg frame 110 is located substantially between the front leg frame 120 and the handlebar frame 130, and the folding mechanism 300 is located between the front leg frame 120 and the handlebar frame 130. The first connecting rod 310 is substantially parallel to the rear vertical rod 112, that is, the main body portion 314 of the first connecting rod 310 is substantially parallel to the rear vertical rod 112. The second connecting rod 320 is located between the front leg frame 120 and the rear leg frame 110, and is not parallel to the front vertical rod 122. In some alternative embodiments, the second connecting rod 320 may be substantially parallel to the front vertical rod 122, while the first connecting rod 310 may not be parallel to the rear vertical rod 112.

It should be noted that, unless otherwise explicitly stated and defined, the orientation terms such as "front" and "rear" in relation to the stroller 1000 in the embodiments of the present disclosure are based on the "front" and "rear" orientations of the stroller 1000 when it is in normal traveling, and the "front" and "rear" directions are schematically shown by arrows F and B in the drawings. These orientation terms are used only to make the description of the embodiments of the present disclosure clearer, and are not used to unduly define the protection scope of the present disclosure.

Referring to FIG. 3, when the frame body 100 is in the unfolded state, the first connecting rod 310 and the second connecting rod 320 are collinear, that is, the extension direction of the first connecting rod 310 is substantially parallel to an extension direction of the second connecting rod 320. In this case, the front vertical rod 122, the rear vertical rod 112, the first connecting rod 310, and the second connecting rod 320 form a substantially triangular structure with a large supporting area, which not only can improve the overall rigidity of the frame body 100 in the unfolded state, making the stroller 1000 easier to pass over obstacles during traveling, but also facilitates the folding of the storage basket. Optionally, the first connecting rod 310 extends substantially in the front-rear direction. That is, the main body portion 314 of the first connecting rod 310 extends substantially in the front-rear direction.

As shown in FIG. 4 to FIG. 7, the first connecting rod 310 is provided with a first limiting portion 312, and the first limiting portion 312 is adapted to abut against a side edge of the second connecting rod 320 to limit a pivot angle between the first connecting rod 310 and the second connecting rod 320 when the frame body 100 is folded. Optionally, an end portion of the first connecting rod 310 pivotally connected to the second connecting rod 320 is provided with a first recessed portion 311, that is, the second end portion of the first connecting rod 310 is provided with the first recessed portion 311. The first recessed portion 311 is adapted to at least partially receive the second connecting rod 320, and a side wall of the first recessed portion 311 forms the first limiting portion 312. The second connecting rod 320 is provided with a second limiting portion 322, and the second limiting portion 322 is adapted to abut against a side edge of the first connecting rod 310 to limit the pivot angle between the first connecting rod 310 and the second connecting rod 320 when the frame body 100 is folded. Optionally, an end portion of the second connecting rod 320 pivotally connected to the first connecting rod 310 is provided with a second recessed portion 321, that is, the first end portion of the second connecting rod 320 is provided with the second recessed portion 321. The second recessed portion 321 is adapted to at least partially receive the first connecting rod 310, and a side wall of the second recessed portion 321 forms the second limiting portion 322. In this embodiment, the second end portion of the first connecting rod 310 is received in the second recessed portion 321, and the first end portion of the second connecting rod 320 is received in the first recessed portion 311, such that an outer surface of the first connecting rod 310 can be substantially flush with an outer surface of the second connecting rod 320 near the second pivotable connection point S2. That is, the first connecting rod 310 and the second connecting rod 320 can pivot substantially in the same plane. In some other embodiments, only the first limiting portion 312 is provided on the first connecting rod 310; alternatively, only the second limiting portion 322 is provide on the second connecting rod 320. Similarly, it is possible that only the first recessed portion 311 is provided on the first connecting rod 310, and the first limiting portion 312 is formed by the side wall of the first recessed portion 311; alternatively, only the second recessed portion 321 is provided on the second connecting rod 320, and the second limiting portion 322 is formed by the side wall of the second recessed portion 321.

In some alternative embodiments, the first limiting portion 312 may be a protrusion structure protruded from the outer surface of the first connecting rod 310. The second limiting portion 322 may be a protrusion structure protruded from the outer surface of the second connecting rod 320.

Referring to FIG. 4 and FIG. 7, a shape of the first limiting portion 312 is matched with a shape of the side edge of the second connecting rod 320. This increases a contact area between the first limiting portion 312 and the side edge of the second connecting rod 320 when they abut against each other. Optionally, the first limiting portion 312 extends substantially linearly, a first included angle θ1 is formed between an extension direction of the first limiting portion 312 and the extension direction of the first connecting rod 310, and the first included angle θ1 is an acute angle. Certainly, in other embodiments, the first limiting portion 312 may be configured in other shapes, such as a curve, depending on the shape of the side edge of the second connecting rod 320.

Referring to FIG. 5 and FIG. 6, a shape of the second limiting portion 322 is matched with a shape of the side edge of the first connecting rod 310. This increases a contact area between the second limiting portion 322 and the side edge of the first connecting rod 310 when they abut against each other. Optionally, the second limiting portion 322 extends substantially linearly, a second included angle θ2 is formed between an extension direction of the second limiting portion 322 and the extension direction of the second connecting rod 320, the second included angle θ2 is an acute angle. Optionally, the first included angle θ1 is equal to the second included angle θ2. By adjusting the extension direction of the first limiting portion 312 and/or the extension direction of the second limiting portion 322, the pivot angle between the first connecting rod 310 and the second connecting rod 320 when the frame body 100 is folded can be adjusted, so as to adjust the size of the folded frame body 100.

Referring to FIG. 3 to FIG. 5, the linkage rod 330 is arc-shaped and forms a clearance recess 331 that is recessed towards a side away from the second pivotable connection point S2. When the frame body 100 is in the folded position, the linkage rod 330 maintains clearance from the second pivotable connection point S2 through the clearance recess 331, that is, the linkage rod 330 is spaced apart from the second pivotable connection point S2 through the clearance recess 331, avoiding the interference of the linkage rod 330 with the second pivotable connection point S2. Specifically, during the folding or unfolding of the frame body 100, the second pivotable connection point S2 is always located between the front leg frame 120 and the linkage rod 330 and is not in contact with the linkage rod 330. In this way, the linkage rod 330, the first connecting rod 310, and the second connecting rod 320 can pivot substantially in the same plane, and in addition, the linkage rod 330 is prevented from interfering with the folding and unfolding of the first connecting rod 310 and the second connecting rod 320. Not only the size of the frame body 100 in the front-rear direction can be reduced, but also the folding and unfolding of the frame body 100 can be more conveniently and smoothly realized.

Returning to FIG. 2, two locking joints 140 are provided, and the two locking joints 140 are substantially symmetrically arranged. For ease of description, the locking joint 140 at one side is described below as an example.

The locking joint 140 includes a first connecting base 141 and a second connecting base 142. The first connecting base 141 is connected to one of the handlebar frame 130 and the front leg frame 120. The second connecting base 142 is connected to the other of the handlebar frame 130 and the front leg frame 120. The first connecting base 141 is pivotally connected to the second connecting base 142 to define the second pivot point X2. Referring to FIG. 2, in this embodiment, the first connecting base 141 is connected to the handlebar vertical rod 132, and the second connecting base 142 is connected to the front vertical rod 122.

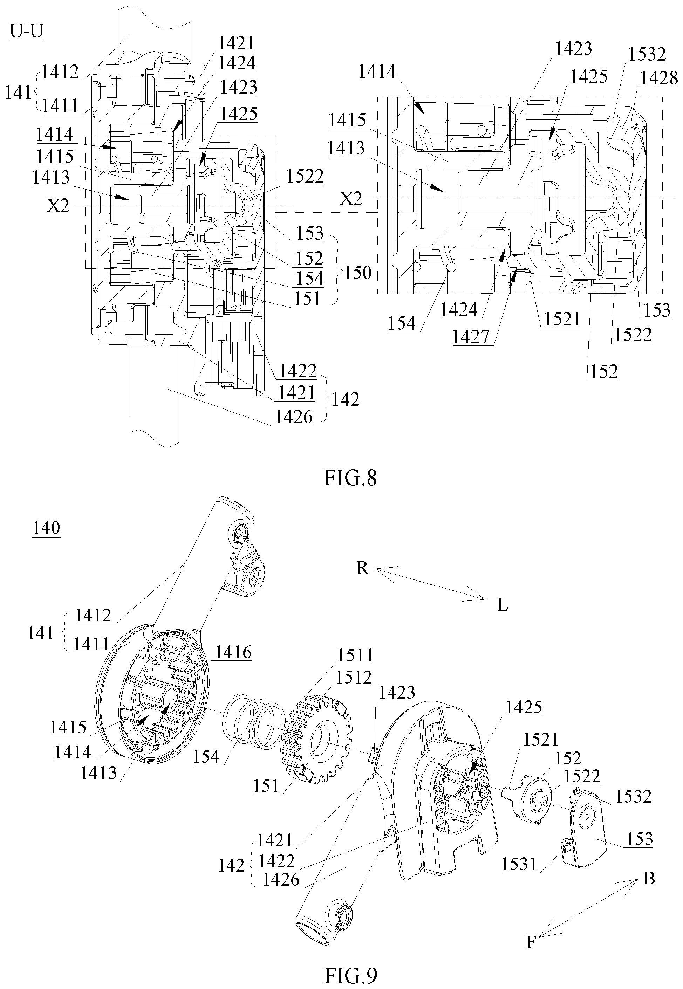

As shown in FIG. 8 and FIG. 9, one of the first connecting base 141 and the second connecting base 142 is provided with a connecting hole 1413, the other of the first connecting base 141 and the second connecting base 142 is provided with a connecting post 1423, and the connecting post 1423 is in insertion fit with the connecting hole 1413 to define the second pivot axis X2 (i.e., the second pivot point X2). In this embodiment, the first connecting base 141 is formed with the connecting hole 1413, and the second connecting base 142 is formed with the connecting post 1423.

As shown in FIG. 2 and FIG. 9, the first connecting base 141 has a first disc portion 1411 and a first connecting portion 1412. The first disc portion 1411 has a substantially disc-shaped outer contour, and the first connecting portion 1412 is connected to an outer circumferential side of the first disc portion 1411. An end of the handlebar vertical rod 132 away from the handlebar cross rod 131 is connected to the first connecting portion 1412, and optionally, the handlebar vertical rod 132 is inserted into the first connecting portion 1412. The rear vertical rod 112 is pivotally connected to the first connecting portion 1412. In other words, the rear vertical rod 112 is indirectly pivotally connected to the handlebar vertical rod 132 through the first connecting portion 1412. The first disc portion 1411 is provided with a first receiving groove 1414 facing the second connecting base 142. A protruding post 1415 is provided in the first receiving groove 1414, and the connecting hole 1413 is formed in the protruding post 1415.

In combination with FIG. 8, the second connecting base 142 has a second disc portion 1421 and a second connecting portion 1426. The second disc portion 1421 has a substantially disc-shaped outer contour, and the second connecting portion 1426 is connected to an outer circumferential side of the second disc portion 1421. An end of the front vertical rod 122 away from the front cross rod 121 is connected to the second connecting portion 1426. The second disc portion 1421 is provided with a second receiving groove 1424 facing the first connecting base 141. The connecting post 1423 is provided in the second receiving groove 1424 and extends out of a groove opening of the second receiving groove 1424. The protruding post 1415 extends out of a groove opening of the first receiving groove 1414 and partially extends into the second receiving groove 1424. In this way, the connecting post 1423 can be inserted more into the connecting hole 1413, thereby increasing the connecting strength therebetween and preventing the first connecting base 141 and the second connecting base 142 from being unintentionally separated.

As shown in FIG. 2, the second connecting base 142 is provided with an engaging portion 1422. The engaging portion 1422 is located on a side of the second disc portion 1421 away from the first connecting base 141 and protrudes away from the first connecting base 141. The seat assembly 200 is provided with a mounting base 210. The engaging portion 1422 is adapted to be engaged with the mounting base 210 to mount the seat assembly 200 on the frame body 100. Optionally, the mounting base 210 is provided with a substantially U-shaped engaging groove 211, the engaging portion 1422 is adapted to be engaged in the engaging groove 211, and the mounting base 210 is detachably fixed on the locking joint 140 by an engaging locking mechanism 500 provided on the mounting base 210, so as to detachably connect the seat assembly 200 to the frame body 100. A detailed structure of the engaging locking mechanism 500 will not be described in detail herein.

Referring to FIG. 2, FIG. 8, and FIG. 9, in an embodiment, the locking joint 140 is provided with a locking mechanism 150 configured to restrict or allow the relative pivoting between the first connecting base 141 and the second connecting base 142. The locking mechanism 150 includes a locking member 151, a pushing member 152, an unlocking member 153, and a reset member 154. The locking member 151 is movably provided in the first connecting base 141 or the second connecting base 142 such that the locking member 151 is enabled to switch between a locked position and an unlocked position. The pushing member 152 is located between the locking member 151 and the unlocking member 153, and the unlocking member 153 drives the locking member 151 to move via the pushing member 152 such that the locking member 151 is switched to the unlocked position. The reset member 154 is adapted to push the locking member 151 to move the locking member 151 to the locked position. When the locking member 151 is in the locked position, the locking member 151 is fitted with each of the first connecting base 141 and the second connecting base 142 to restrict the relative pivoting between the first connecting base 141 and the second connecting base 142; and when the locking member 151 is in the unlocked position, the locking member 151 is removed from one of the first connecting base 141 and the second connecting base 142 to allow the relative pivoting between the first connecting base 141 and the second connecting base 142.

The locking member 151 is sleeved on the protruding post 1415 and is movably provided in the first receiving groove 1414. The locking member 151 is provided with a first locking portion 1511 and a second locking portion 1512, the first receiving groove 1414 is provided with a first fitting portion 1416 adapted to be fitted with the first locking portion 1511, and the second receiving groove 1424 is provided with a second fitting portion (not shown) adapted to be fitted with the second locking portion 1512. Referring to FIG. 8, when the locking member 151 is in the locked position, one end of the locking member 151 extends out of the first receiving groove 1414 and into the second receiving groove 1424, and in this case, the first locking portion 1511 is fitted with the first fitting portion 1416, and the second locking portion 1512 is fitted with the second fitting portion (not shown), thereby restricting the relative pivoting between the first connecting base 141 and the second connecting base 142. When the locking member 151 is in the unlocked position, the locking member 151 is withdrawn from the second receiving groove 1424, the first locking portion 1511 is fitted with the first fitting portion 1416, and the second locking portion 1512 is removed from the second fitting portion (not shown) and fitted with the first fitting portion 1416, thereby allowing the relative pivoting between the first connecting base 141 and the second connecting base 142. In this embodiment, the locking member 151 is substantially an external gear structure; a first internal gear structure, adapted to engage with the external gear structure, is formed within the first receiving groove 1414; and a second internal gear structure, adapted to engage with the external gear structure, is formed within the second receiving groove 1424. The first locking portion 1511 and the second locking portion 1512 are formed by a plurality of teeth of the external gear structure, the first fitting portion 1416 is formed by a plurality of teeth of the first internal gear structure, and the second fitting portion (not shown) is formed by a plurality of teeth of the second internal gear structure. In other embodiments, the locking member 151 can have other shapes such as a polygonal prism. The first receiving groove 1414 and the second receiving groove 1424 are each adapted to be fitted with the polygonal prism. Both ends of the polygonal prism are respectively formed as the first locking portion 1511 and the second locking portion 1512, a side wall of the first receiving groove 1414 is formed as the first fitting portion 1416, and a side wall of the second receiving groove 1424 is formed as the second fitting portion (not shown).

Referring to FIG. 8 and FIG. 9, the reset member 154 is, for example, a compression spring. The reset member 154 is provided in the first receiving groove 1414 and sleeved on the protruding post 1415, and the reset member 154 is provided between a bottom wall of the first receiving groove 1414 and the locking member 151 to constantly bias the locking member 151 towards the locked position where the locking member 151 extends out of the first receiving groove 1414 (that is, towards the second receiving groove 1424).

The pushing member 152 is movably provided in the second connecting base 142 and has a pushing portion 1521 and a pushing protrusion 1522, and the pushing portion 1521 is adapted to push the locking member 151 to drive the locking member 151 to move to the unlocked position. The second connecting base 142 is provided with an accommodating groove 1425 at a side thereof facing away from the first connecting base 141, and the accommodating groove 1425 is in communication with the second receiving groove 1424 through a communication hole 1427. Optionally, the accommodating groove 1425 is formed substantially in the engaging portion 1422. The pushing member 152 is movably provided in the accommodating groove 1425, and the pushing portion 1521 of the pushing member 152 can extend into the second receiving groove 1424 through the communication hole 1427 and abut against the locking member 151. An extension direction of the pushing portion 1521 is opposite to a protruding direction of the pushing protrusion 1522. Optionally, the pushing portion 1521 has a substantially elongated rod structure and extends towards the locking member 151, the pushing protrusion 1522 protrudes towards the unlocking member 153, and the locking member 151 and the unlocking member 153 are respectively located on two opposite sides of the pushing member 152.

The unlocking member 153 is pivotably provided in the second connecting base 142 such that the unlocking member 153 can push the pushing protrusion 1522 to drive the pushing member 152 to move. In this embodiment, the unlocking member 153 is embedded in the accommodating groove 1425 and can be partially exposed out of the second connecting base 142 through a groove opening of the accommodating groove 1425. The unlocking member 153 is provided with a pivot pin portion 1531 and a first limiting protrusion 1532. The accommodating groove 1425 is provided with a pivot recess (not shown) on a side wall thereof, and the accommodating groove 1425 is provided with a second limiting protrusion 1428 on the side wall or at a groove opening thereof. The pivot pin portion 1531 is inserted into the pivot recess (not shown) and defines a pivot axis of the unlocking member 153. The pivot pin portion 1531 extends substantially in the front-rear direction. The first limiting protrusion 1532 is adapted to be stopped by the second limiting protrusion 1428, thereby limiting the unlocking member 153 within the accommodating groove 1425.

It should be noted that, in this embodiment, the mounting base 210 is provided with a driving member (not shown) capable of extending out of the mounting base 210. After the engaging portion 1422 is engaged with the mounting base 210, that is, after the seat assembly 200 is mounted on the frame body 100, the unlocking member 153 is shielded by the mounting base 210, and a user can actuate the driving member extending out of the mounting base 210 to press the unlocking member 153 to drive the unlocking member 153 to pivot. The unlocking member 153 pivots to push the pushing member 152 to move, and the pushing member 152 moves to push the locking member 151 to move to the unlocked position, thereby allowing the frame body 100 to be folded. Therefore, the seat assembly 200 and the frame body 100 can be folded together without removing the seat assembly 200 from the frame body 100, which improves the efficiency of folding of the stroller 1000.

The following is the folding process of the stroller 1000 provided according to the embodiment of the present disclosure.

When the stroller 1000 or the frame body 100 needs to be folded, the unlocking member 153 of each of the left and right locking joints 140 can be driven by the driving member (not shown) to pivot, the unlocking member 153 pushes the pushing protrusion 1522 to move the pushing member 152, and the pushing member 152 abuts and pushes the locking member 151, via the pushing portion 1521, to move from the locked position to the unlocked position, so that the locking member 151 is withdrawn from the second receiving groove 1424, thereby allowing the first connecting base 141 and the second connecting base 142 of each of the locking joints 140 to pivot relative to each other.

As shown in FIG. 3 and FIG. 4, the handlebar frame 130 rotates around the first pivot point X1 in a clockwise direction D1 under the action of gravity, and drives the locking joint 140 and the linkage rod 330 to move together upwards, and the linkage rod 330 drives, via the first rotation point R1 and the second rotation point R2, the first connecting rod 310 to rotate around the first pivotable connection point S1 relative to the rear leg frame 110, causing the second pivotable connection point S2 to move upwards and towards the rear leg frame 110. The movement of the second pivotable connection point S2 drives the second connecting rod 320 to rotate in a counterclockwise direction D2 relative to the front leg frame 120, and drives, via the second connecting rod 320, the front leg frame 120 to pivot towards to the rear leg frame 110 (i.e., in the counterclockwise direction D2) around the second pivot point X2.

After the frame body 100 has been folded (see FIG. 5), the unlocking member 153 is released, such that the locking member 151 partially extends into the second receiving groove 1424 under the action of the reset member 154, and the second locking portion 1512 is fitted with the second fitting portion (not shown), thereby locking the stroller 1000 in the folded state as shown in FIG. 5. At the same time, during the process of the locking member 151 extending into the second receiving groove 1424, the unlocking member 153 pushes, via the pushing portion 1521 of the pushing member 152, the pushing member 152 to move, and the pushing member 152 pushes, via the pushing protrusion 1522, the unlocking member 153 to pivot, causing the unlocking member 153 and the pushing member 152 to return to their initial positions.

### Reference signs

- 1000: stroller
- 100: frame body
- 110: rear leg frame
- 111: rear cross rod
- 112: rear vertical rod
- 120: front leg frame
- 121: front cross rod
- 122: front vertical rod
- 130: handlebar frame
- 131: handlebar cross rod
- 132: handlebar vertical rod;
- 140: locking joint
- 141: first connecting base
- 1411: first disc portion
- 1412: first connecting portion
- 1413: connecting hole
- 1414: first receiving groove
- 1415: protruding post
- 142: second connecting base
- 1421: second disc portion
- 1422: engaging portion
- 1423: connecting post
- 1424: second receiving groove
- 1425: accommodating groove
- 1426: second connecting portion
- 1427: communication hole
- 150: locking mechanism
- 151: locking member
- 152: pushing member
- 1521: pushing portion
- 1522: pushing protrusion
- 153: unlocking member
- 154: reset member;
- 200: seat assembly
- 210: mounting base
- 211: engaging groove;
- 300: folding mechanism;
- 310: first connecting rod
- 311: first recessed portion
- 312: first limiting portion
- 313: first fixing portion
- 314: main body portion
- 315: pivoting portion
- 3151: second avoidance recess;
- 320: second connecting rod
- 321: second recessed portion
- 322: second limiting portion
- 323: second fixing portion;
- 330: linkage rod
- 331: clearance recess
- 332: first avoidance recess;
- 401: rear wheel
- 402: front wheel;
- 500: engaging locking mechanism.
- X1: first pivot point
- X2: second pivot point
- S1: first pivotable connection point
- S2: second pivotable connection point
- S3: third pivotable connection point
- R1: first rotation point
- R2: second rotation point
- θ1: first included angle
- θ2: second included angle.

## Claims

1. A stroller (1000), comprising:
a frame body (100) comprising a front leg frame (120), a rear leg frame (110), and a handlebar frame (130), the rear leg frame (110) being pivotally connected to the handlebar frame (130) to form a first pivot point (X1), and the front leg frame (120) being pivotally connected to the handlebar frame (130) to form a second pivot point (X2); and
a folding mechanism (300) comprising:
a first connecting rod (310) pivotally connected to the rear leg frame (110) at a first pivotable connection point (S1),
a second connecting rod (320) pivotally connected to the first connecting rod (310) at a second pivotable connection point (S2) and pivotally connected to the front leg frame (120) at a third pivotable connection point (S3), and
a linkage rod (330) pivotally connected to the first connecting rod (310) at a first rotation point (R1) and pivotally connected to the front leg frame (120) at a second rotation point (R2);
wherein the second rotation point (R2) is located between the second pivot point (X2) and the third pivotable connection point (S3), and the linkage rod (330) is adapted to drive the first connecting rod (310) to rotate to cause the frame body (100) to switch between a folded state and an unfolded state.

2. The stroller (1000) according to claim 1, wherein a first end of the linkage rod (330) is pivotally connected to the first connecting rod (310) to form the first rotation point (R1), and the first rotation point (R1) is located between the first pivotable connection point (S1) and the second pivotable connection point (S2).

3. The stroller (1000) according to claim 1 or 2, wherein the first connecting rod (310) is provided with a first limiting portion (312) adapted to abut against a side edge of the second connecting rod (320) to limit a pivot angle between the first connecting rod (310) and the second connecting rod (320) when the frame body (100) is folded; and/or
the second connecting rod (320) is provided with a second limiting portion (320) adapted to abut against a side edge of the first connecting rod (310) to limit the pivot angle between the first connecting rod (310) and the second connecting rod (320) when the frame body (100) is folded.

4. The stroller (1000) according to any one of claims 1 to 3, wherein an end portion of the first connecting rod (310) pivotally connected to the second connecting rod (320) is provided with a first recessed portion (311) adapted to at least partially receive the second connecting rod (320), and a side wall of the first recessed portion (311) forms a first limiting portion (312) adapted to abut against a side edge of the second connecting rod (320); and/or
an end portion of the second connecting rod (320) pivotally connected to the first connecting rod (310) is provided with a second recessed portion (321) adapted to at least partially receive the first connecting rod (310), and a side wall of the second recessed portion (321) forms a second limiting portion (322) adapted to abut against a side edge of the first connecting rod (310).

5. The stroller (1000) according to any one of claims 1 to 4, wherein the rear leg frame (110) comprises a rear cross rod (111) and rear vertical rods (112) respectively connected to two ends of the rear cross rod (111), and / or the front leg frame (120) comprises a front cross rod (121) and front vertical rods (122) respectively connected to two ends of the front cross rod (121);
when the frame body (100) is in the folded state, the first connecting rod (310) is parallel to the rear vertical rods (112), or the second connecting rod (320) is parallel to the front vertical rods (122); and
when the frame body (100) is in the unfolded state, the first connecting rod (310) and the second connecting rod (320) are collinear.

6. The stroller (1000) according to any one of claims 1 to 5, wherein the first rotation point (R1) is located between the first pivotable connection point (S1) and the second pivotable connection point (S2), and the linkage rod (330) is recessed away from the second pivotable connection point (S2) to form a clearance recess (331); and
when the frame body (100) is in the folded state, the linkage rod (330) is spaced apart from the second pivotable connection point (S2) via the clearance recess (331).

7. The stroller (1000) according to any one of claims 1 to 6, wherein the first connecting rod (310) is provided with a first fixing portion (313), the second connecting rod (320) is provided with a second fixing portion (323), and the first fixing portion (313) and the second fixing portion (323) are each adapted to connect to a storage basket fabric.

8. The stroller (1000) according to any one of claims 1 to 7, further comprising a locking joint (140) and a seat assembly (200), wherein
the locking joint (140) comprises:
a first connecting base (141) connected to one of the handlebar frame (130) and the front leg frame (120), and
a second connecting base (142) connected to the other of the handlebar frame (130) and the front leg frame (120);
the first connecting base (141) is pivotally connected to the second connecting base (142) to define the second pivot point (X2);
the seat assembly (200) is provided with a mounting base (210); and
the second connecting base (142) is provided with an engaging portion (1422) protruded away from the first connecting base (141), and the engaging portion (1422) is adapted to engage with the mounting base (210).

9. The stroller (1000) according to claim 8, wherein the locking joint (140) is provided with a locking mechanism (150) comprising:
a locking member (151) movably provided in the first connecting base (141) or the second connecting base (142) to allow the locking member (151) to switch between a locked position and an unlocked position, wherein when the locking member (151) is in the locked position, the locking member (151) is fitted with each of the first connecting base (141) and the second connecting base (142) to restrict the first connecting base (141) and the second connecting base (142) from pivoting relative to each, and when the locking member (151) is in the unlocked position, the locking member (151) is removed from one of the first connecting base (141) and the second connecting base (142) to allow the first connecting base (141) and the second connecting base (142) to pivot relative to each;
a pushing member (152) movably provided in the second connecting base (142) and adapted to push the locking member (151) to drive the locking member (151) to move to the unlocked position; and
an unlocking member (153) pivotably provided in the second connecting base (142) to push the pushing member (152) to move.

10. The stroller (1000) according to claim 9, wherein after the engaging portion (1422) is engaged with the mounting base (210), the unlocking member (151) is shielded by the mounting base (200).

11. The stroller (1000) according to any one of claims 1 to 10, wherein the handlebar frame (130) comprises a handlebar cross rod (131) and handlebar vertical rods (132) respectively connected to left and right ends of the handlebar cross rod (131), an end of each of the handlebar vertical rods (132) away from the handlebar cross rod (131) is pivotally connected to the front leg frame (120) to form the second pivot point (X2), and the second pivot point (X2) is farther from the handlebar cross rod (131) than the first pivot point (X1).

12. The stroller (1000) according to any one of claims 1 to 11, wherein a length of the first connecting rod (310) is greater than a length of the second connecting rod (320); or
a distance between the first rotation point (R1) and the first pivotable connection point (S1) is substantially equal to a distance between the first rotation point (R1) and the second pivotable connection point (S2); or
a distance between the second rotation point (R2) and the second pivot point (X2) is smaller than a distance between the second rotation point (R2) and the third pivotable connection point (S3).

13. The stroller (1000) according to any one of claims 1 to 12, wherein the first connecting rod (310) comprises a main body portion (314) and a pivoting portion (315), the main body portion (314) has a substantially linearly extending rod structure, and the pivoting portion (315) is provided at a side of the main body portion (314);
two ends of the main body portion (314) are pivotally connected to the rear leg frame (110) and the second connecting rod (320), respectively; and
the pivoting portion (315) is pivotally connected to a first end of the linkage rod (330); optionally, the pivoting portion (315) is located substantially at the middle of the main body portion (314).
optionally, the first end of the linkage rod (330) is provided with a first avoidance recess (332), the pivoting portion (315) is provided with a second avoidance recess (3151), a part of the pivoting portion (315) is received in the first avoidance recess (332), and the first end of the linkage rod (330) is received in the second avoidance recess (3151).

14. The stroller (1000) according to any one of claims 1 to 13, wherein the stroller (1000) is provided with a storage basket assembly comprising a foldable storage basket fabric, and the storage basket fabric is fixed to each of the first connecting rod (310) and the second connecting rod (320).

15. The stroller (1000) according to any one of claims 1 to 14, wherein when the frame body (100) is in the folded state, in a front-rear direction, the rear leg frame (110) is located between the front leg frame (120) and the handlebar frame (130), and the folding mechanism (300) is located between the front leg frame (120) and the handlebar frame (130).
